# EUROPÄISCHE PATENTSCHRIFT

(11) **EP 2 508 777 B1**
(45) Veröffentlichungstag und Bekanntmachung des Hinweises auf die Patenterteilung: **02.04.2014**
(21) Anmeldenummer: 11174846.3
(22) Anmeldetag: 21.07.2011
(51) Int. Cl.: F16H 1/46, F03D 11/02

(54) **Antriebssystem für eine Windkraftanlage**
Drive system for a wind turbine
Système de propulsion pour une éolienne

(30) Priorität: 04.04.2011 EP 11002782
(43) Veröffentlichungstag der Anmeldung: 10.10.2012
(73) Patentinhaber: Siemens Aktiengesellschaft, 80333 München (DE)
(72) Erfinder: Dinter, Ralf Martin, 45888 Gelsenkirchen (DE); Reimers, Jan-Dirk, 52074 Aachen (DE); Klein-Hitpass, Arno, 52074 Aachen (DE)

(56) Entgegenhaltungen:
- EP-A2- 1 717 489
- EP-A2- 2 031 273
- EP-A2- 2 216 547
- WO-A2-2010/005790
- CN-A- 101 363 407
- DE-U1- 29 609 794
- GB-A- 2 405 455
- JP-A- 2009 250 213

## Beschreibung

Aus gattungsgemäßen EP 2 031 273 A2 ist eine Generator-Getriebe-Einheit bekannt, bei der ein Rotor des Generators mittels einer zwischen einer inneren Rotorhohlwelle und einem Gehäusestutzen vorgesehenen Lageranordnung gelagert ist. Spulen- bzw. Magnetanordnungen des Rotors umgeben den Gehäusestutzen radial. Zwischen der inneren Rotorhohlwelle und einer Sonnenwelle ist eine Kupplung vorgesehen. Die Sonnenwelle verfügt über keine eigenen Lager, sondern ist über die Lageranordnung des Rotors gelagert.

In der nach der Priorität veröffentlichte EP 2 372 148 A1 ist eine Antriebsvorrichtung für eine Windkraftanlage beschrieben, die mindestens 2 zumindest dreischenklige Trägerelemente zur Lagerung von zumindest 3 Ritzelwellen umfaßt. Die Ritzelwellen sind jeweils mittels an Eckpunkten der Trägerelemente angeordneten Ritzelwellenlagern gelagert. Die Ritzelwellenlager sind durch Lagersitzelemente an den Trägerelementen befestigt. Mindestens ein Trägerelement ist zusätzlich zur Lagerung einer mit einer Rotornabe verbindbaren Anschlußwelle ausgestaltet, die von diesem Trägerelement umgeben ist und deren Achse durch den Mittelpunkt des Trägerelements verläuft. Eine erste Getriebestufe der erfindungsgemäßen Antriebsvorrichtung weist ein außenverzahntes Zentralrad auf. Das Zentralrad ist auf der Anschlußwelle befestigt und kämmt mit zumindest 3 Ritzeln der ersten Getriebestufe, die an ersten Enden der Ritzelwellen angeordnet sind. An zweiten Enden der Ritzelwellen sind zumindest 3 Zahnräder einer zweiten Getriebestufe angeordnet, die mit einem Zentralritzel der zweiten Getriebestufe kämmen.

Aus EP 2 295 147 A1 ist ein Mühlenantriebssystem mit einem unterhalb eines Mahltellers anordenbaren Getriebe mit zumindest einer Planeten- bzw. Stirnradstufe sowie einem in ein Gehäuse des Getriebes integrierten elektrischen Motor bekannt. Außerdem umfaßt das Mühlenantriebssystem einen Umrichter mit einer zugeordneten Regelungseinrichtung zur verzahnungsspielfreien Drehzahlregelung des Motors.

In der nach der Priorität veröffentlichte EP 2 508 754 A1 ist ein Antriebssystem für eine Windkraftanlage beschrieben, das eine zumindest eine Planetenradstufe, die ein Hohlrad, mehrere Planetenräder, einen Planetenträger und ein Sonnenrad aufweist, umfassende Getriebeeinheit aufweist. Des weiteren ist eine der Getriebeeinheit zugeordnete erste Welle vorgesehen, die einen mit einer Arbeitsmaschinen- oder Rotorwelle verbindbaren Kupplungsflansch aufweist und über den Planetenträger gelagert ist. Die Getriebeeinheit und eine mit einer zweiten Welle der Getriebeeinheit verbundene Motor- oder Generatoreinheit sind von einem Getriebegehäuse umgeben, das eine kardanische umfangssymmetrische oder teilsymmetrische Aufhängung zur Verbindung mit einem tragenden Strukturelement der Windkraftanlage aufweist.

Der vorliegenden Erfindung liegt die Aufgabe zugrunde, ein kompaktes und montagefreundliches Antriebssystem für eine Windkraftanlage anzugeben.

Diese Aufgabe wird erfindungsgemäß durch ein Antriebssystem mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Antriebssystem weist eine zumindest eine Planetenradstufe, die ein Hohlrad, mehrere Planetenräder, einen Planetenträger und ein Sonnenrad aufweist, umfassende Getriebeeinheit auf. Des weiteren ist eine der Getriebeeinheit zugeordnete erste Welle vorgesehen, die einen mit einer Arbeitsmaschinen- oder Rotorwelle verbindbaren Kupplungsflansch aufweist und über den Planetenträger gelagert ist. Die Getriebeeinheit und eine mit einer zweiten Welle der Getriebeeinheit verbundene Motor- oder Generatoreinheit sind von einem Getriebegehäuse umgeben. Außerdem umfaßt die Motor- oder Generatoreinheit einen drehfest mit einer Rotorhohlwelle verbundenen Rotor.

Radial zwischen der zweiten Welle der Getriebeeinheit und der Rotorhohlwelle ist erfindungsgemäß eine Kupplung oder Spannverbindung angeordnet. Darüber hinaus ist ein zwischen Getriebeeinheit und Motor- oder Generatoreinheit angeordneten Getriebegehäusestutzen mit einem hohlzylindrischen Fortsatz vorgesehen. Dieser hohlzylindrische Fortsatz umgibt einen motor- oder generatorseitigen Endabschnitt der zweiten Welle der Getriebeeinheit konzentrisch und bildet einen Lagersitz für eine radial zwischen der zweiten Welle und dem hohlzylindrischen Fortsatz angeordnete Lageranordnung. Dabei ist der hohlzylindrische Fortsatz wiederum von Rotor und Rotorhohlwelle konzentrisch umgeben. Des weiteren ist zumindest ein äußeres Lagerelement der Lageranordnung mit dem hohlzylindrischen Fortsatz verbunden. Mittels der Lageranordnung ist sowohl die zweite Welle der Getriebeeinheit als auch die Rotorhohlwelle gelagert. Das erfindungsgemäße Antriebssystem weist dadurch eine kurze Bauweise auf. Darüber hinaus ist die Lageranordnung bei Demontage von Kupplung bzw. Spannverbindung für Wartungs- oder Montagearbeiten zugänglich, ohne daß der Rotor der Motor- oder Generatoreinheit demontiert werden muß.

Ein motor- oder generatorseitiger Endabschnitt der zweiten Welle der Getriebeeinheit ist entsprechend einer vorteilhaften Weiterbildung der vorliegenden Erfindung von einer Getriebehohlwelle konzentrisch umgeben und mit dieser drehfest verbunden. In diesem Fall ist zumindest ein inneres Lagerelement der Lageranordnung vorgesehen, das anstelle mit der zweiten Welle mit der Getriebehohlwelle verbunden ist.

Vorzugsweise sind die Rotorhohlwelle und die zweite Welle der Getriebeeinheit ausschließlich mittels der Lageranordnung am Getriebegehäusestutzen gelagert. Dies ermöglicht einen besonders kompakten und wartungsfreundlichen Aufbau.

Die Getriebehohlwelle kann mit der zweiten Welle der Getriebeeinheit beispielsweise durch eine Zahnkupplung mit Kurz- oder Bogenverzahnung verbunden sein. Alternativ dazu kann die Getriebehohlwelle mit der zweiten Welle der Getriebeeinheit durch einen Innenspannsatz verbunden sein. Der Innenspannsatz umfaßt dabei beispielsweise zumindest jeweils einen Außenring und einen Innenring, die zueinander korrespondierende konische Kontaktflächen aufweisen und mittels mehrerer sich axial erstreckender Spannschrauben gegeneinander verspannbar sind. Durch Verspannung des zumindest einen Außenrings und des zumindest einen Innenrings können entsprechend einer bevorzugten Ausgestaltung der vorliegenden Erfindung sowohl die zweite Welle der Getriebeeinheit und die Getriebehohlwelle als auch die Getriebehohlwelle und die Rotorhohlwelle miteinander verbunden werden. Dies ergibt eine verbesserte Montagefreundlichkeit. Alternativ zu einer Zahnkupplung oder einem Innenspannsatz kann die Getriebehohlwelle mit der zweiten Welle der Getriebeeinheit durch einen Außenspannsatz verbunden sein.

Entsprechend einer vorteilhaften Weiterbildung der vorliegenden Erfindung ist die zweite Welle der Getriebeeinheit axial etwa zur Hälfte von der Getriebehohlwelle umgeben. Auf diese Weise kann die Lageranordnung der Getriebehohlwelle axial mittig auf den Rotor der Motor- oder Generatoreinheit ausgerichtet werden.

Vorzugsweise ist der Getriebegehäusestutzen an einen zwischen Getriebeeinheit und Motor- oder Generatoreinheit angeordneten Gehäusezwischenflansch angeformt. Dabei kann der Gehäusezwischenflansch einen Lagersitz für ein motor- oder generatorseitiges Planetenträgerlager aufweisen. Außerdem können am Gehäusezwischenflansch insbesondere ein Statormantel der Motor- oder Generatoreinheit sowie ein Hohlrad einer motor-oder generatorseitigen Planetenradstufe montiert sein. Darüber hinaus kann der Gehäusezwischenflansch jeweils einen Flanschfortsatz aufweisen, an dem jeweils der Statormantel bzw. das Hohlrad der motor- oder generatorseitigen Planetenradstufe montiert ist. In vorteilhafter Weise sind beide Flanschfortsätze hinsichtlich ihrer Durchmesser derart abgestuft, daß sie in einer vergleichbaren Größenordnung liegen, wobei der Flanschfortsatz für den Statormantel der größere von beiden ist. Bei gewichtsoptimierter Bauform kann der Flanschfortsatz für das Hohlrad der motor- oder generatorseitigen Planetenradstufe innenliegend ausgerichtet und gegen den Gehäusezwischenflansch verschraubt sein. Entsprechend einer weiteren Ausgestaltung der vorliegenden Erfindung sind der dem Statormantel zugeordnete Flanschfortsatz und der dem Hohlrad zugeordnete Flanschfortsatz axial voneinander beabstandet.

Entsprechend einer besonders bevorzugten Weiterbildung der vorliegenden Erfindung ist der Kupplungsflansch mit der Arbeitsmaschinen- oder Rotorwelle elastisch verbindbar. Auf diese Weise ist eine kardanische Ankupplung einer Arbeitsmaschine oder Rotorwelle möglich, insbesondere mit Winkelversatz. Eine solche Ankupplung kann beispielsweise mittels elastischer Bolzen realisiert sein. Des weiteren weist vorteilhafterweise auch das Getriebegehäuse eine kardanische umfangssymmetrische oder teilsymmetrische Aufhängung zur Verbindung mit einem tragenden Strukturelement der Windkraftanlage auf. Das tragende Strukturelement kann beispielsweise ein Fundamentlager mit einer Anbindung an einen Rahmen oder eine Gondel der Windkraftanlage sein. Durch eine doppel- oder vollkardanische Aufhängung des Antriebssystems innerhalb des tragenden Strukturelements und durch eine kardanische Anbindung des Kupplungsflansches können lager- bzw. verzahnungsschädigende Einflüsse vermieden werden. Aufgrund von Hauptrahmenverformungen einer Windkraftanlage entstehende Verschiebungen in Fundamentauflagern, die entsprechend bisherigen Lösungen über eine Aufhängung eines Antriebstrangs in diesen eingekoppelt werden, führen somit nicht zu unerwünschten Zwangskräften, sondern werden durch die kardanische Aufhängung vermieden. Damit ist das Antriebssystem lediglich Torsionsbelastungen ausgesetzt.

Bei Verwendung des erfindungsgemäßen Antriebssystems in einer Windkraftanlage ist die Getriebeeinheit mit einer Generatoreinheit verbunden. Des weiteren ist die erste Welle der Getriebeeinheit in diesem Fall eine getriebeseitige Antriebswelle. Die zweite Welle der Generatoreinheit ist dagegen eine getriebeseitige Abtriebswelle. Der Kupplungsflansch der getriebeseitigen Antriebswelle ist bei Verwendung des erfindungsgemäßen Antriebssystems in einer Windkraftanlage mit einer Rotorwelle verbindbar.

Die vorliegende Erfindung wird nachfolgend an einem Ausführungsbeispiel anhand der Zeichnung näher erläutert. Es zeigt
- Figur 1: eine perspektivische Schnittdarstellung eines erfindungsgemäßen Antriebssystems für eine Windkraftanlage,
- Figur 2: eine Schnittdarstellung des in Figur 1 dargestellten Antriebssystems mit Getriebe- und Generatoreinheit,
- Figur 3: eine Schnittdarstellung einer ersten Variante eines Gehäusezwischenflansches zwischen Getriebe- und Generatoreinheit,
- Figur 4: eine Schnittdarstellung einer zweiten Variante eines Gehäusezwischenflansches zwischen Getriebe- und Generatoreinheit,
- Figur 5: eine schematische Darstellung eines Antriebssystems für eine Windkraftanlage einschließlich Netzanbindung,
- Figur 6: eine Ringstütze zur vollkardanischen Aufhängung des Antriebssystems gemäß Figur 1 mit einer korrespondierenden zweiarmige Drehmomentstütze,
- Figur 7: zwei Ringsegmentstützen zur vollkardanischen Aufhängung des Antriebssystems gemäß Figur 1 mit korrespondierenden Drehmomentstützen,
- Figur 8: zwei Ringsegmentstützen in einer gegenüber Figur 7 abgewandelten Variante.

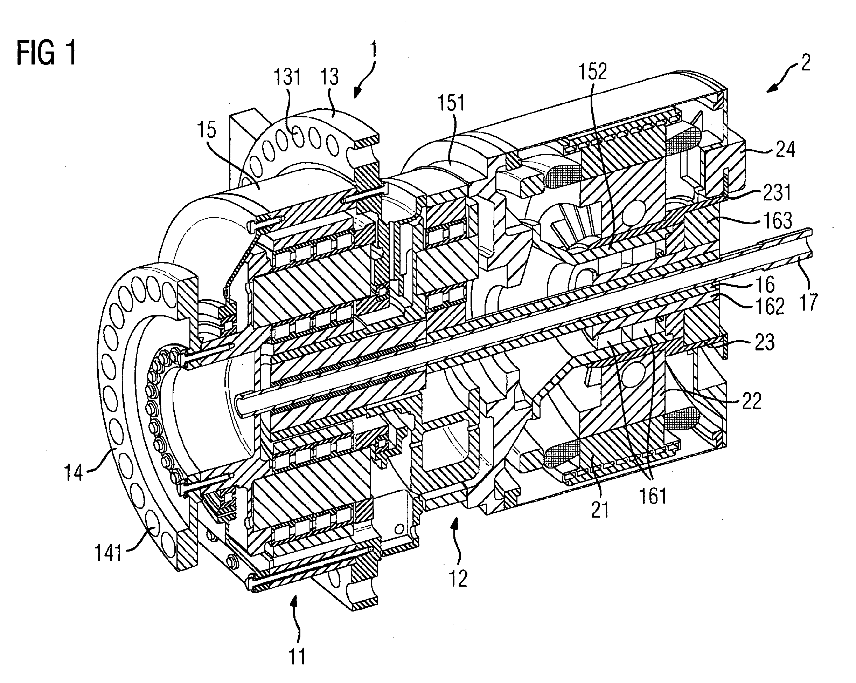

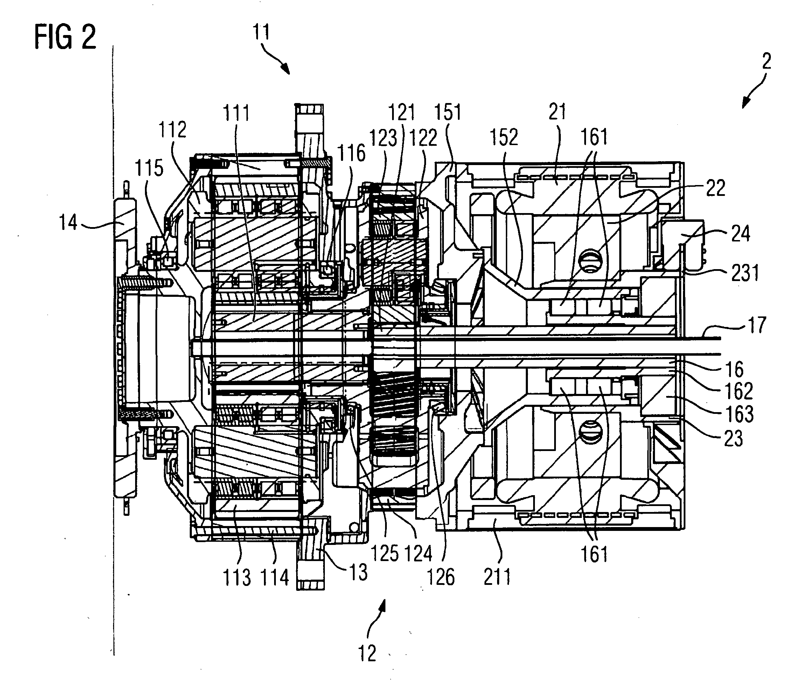

Das in Figur 1 dargestellte Antriebssystem für eine Windkraftanlage weist ein Getriebeeinheit 1 mit einer ersten 11 und zweite Planetenradstufe 12 in koaxialer Bauform auf. Wie auch der Schnittdarstellung gemäß Figur 2 zu entnehmen ist, umfaßt jede Planetenradstufe 11, 12 jeweils ein Hohlrad 114, 124, mehrere Planetenräder 113, 123, einen Planetenträger 112, 122 und ein Sonnenrad 111, 121. Die Getriebeeinheit 1 ist über eine Abtriebswelle 16 der Getriebeeinheit mit einer Generatoreinheit 2 verbunden und gemeinsam mit dieser in einem Getriebegehäuse 15 angeordnet. Der Getriebeeinheit 1 ist eine an den Planetenträger 112 der ersten Planetenradstufe 11 angeformte Antriebswelle zugeordnet, die einen mit einer Rotorwelle verbindbaren Kupplungsflansch 14 aufweist und über den Planetenträger 112 der ersten Planetenradstufe 11 gelagert ist. Dem Planetenträger 112 der ersten Planetenradstufe 11 sind zwei zwischen Planetenträgerwangen und Getriebegehäuse 15 angeordnete Lager 115 und 116 zugeordnet, die ein erstes und ein zweites Hauptlager der Getriebeeinheit 1 darstellen. In entsprechender Weise ist der Planetenträger 122 der zweiten Planetenradstufe 12 durch zwei zwischen Planetenträgerwangen und Getriebegehäuse 15 angeordnete Lager 125 und 126 gelagert.

Die Generatoreinheit 2 umfaßt einen Stator 21 und einen drehfest mit einer Rotorhohlwelle 23 verbundenen Rotor 22. Radial zwischen der Abtriebswelle 16 der Getriebeeinheit 1 und der Rotorhohlwelle 23 ist eine Kupplung oder Spannverbindung 163 angeordnet. Darüber hinaus ist zwischen Getriebeeinheit 1 und Generatoreinheit 2 ein Getriebegehäusestutzen 152 mit einem hohlzylindrischen Fortsatz angeordnet. Der hohlzylindrische Fortsatz umgibt einen generatorseitigen Endabschnitt der Abtriebswelle 16 konzentrisch und bildet einen Lagersitz für eine radial zwischen der Abtriebswelle 16 und dem hohlzylindrischen Fortsatz angeordnete Lageranordnung 161. Der hohlzylindrische Fortsatz ist wiederum von Rotor 22 und Rotorhohlwelle 23 konzentrisch umgeben. Im vorliegenden Ausführungsbeispiel sind zwei äußere Lagerelemente der Lageranordnung 161 mit dem hohlzylindrischen Fortsatz verbunden.

Ein generatorseitiger Endabschnitt der Abtriebswelle 16 der Getriebeeinheit 1 ist von einer Getriebehohlwelle 162 konzentrisch umgeben und mit dieser drehfest verbunden. Mit dieser Getriebehohlwelle 162 sind zwei innere Lagerelemente der Lageranordnung 161 verbunden. Somit ist mittels der Lageranordnung 161 sowohl die Abtriebswelle 16 der Getriebeeinheit 1 als auch die Rotorhohlwelle 23 gelagert. Dabei ist die im hohlzylindrischen Fortsatz des Getriebegehäusestutzens 152 angeordnete Lageranordnung 161 im vorliegenden Ausführungsbeispiel axial mittig auf den Rotor 22 der Generatoreinheit 2 ausgerichtet. Darüber hinaus ist innerhalb der Abtriebswelle 16 und der Rotorhohlwelle 23 ein Pitch-Rohr 17 angeordnet, das sich axial über das gesamte Antriebssystem erstreckt.

Entsprechend der Schnittdarstellung gemäß Figur 2 ist die Abtriebswelle 16 der Getriebeeinheit 1 axial etwa zur Hälfte von der Getriebehohlwelle 162 umgeben. Die Lageranordnung 161 der Abtriebswelle 16 innerhalb des hohlzylindrischen Fortsatzes des Gehäusestutzens 152 umfaßt vorzugsweise ein doppelreihiges Lager in X-Anordnung. Darüber hinaus sind die Rotorhohlwelle 23 und die Abtriebswelle 16 der Getriebeeinheit 1 entsprechend einer besonders bevorzugten Ausführungsform ausschließlich mittels der Lageranordnung 161 am Gehäusestutzen 152 gelagert. Ein hinteres Rotorhohlwellenlager an einer von der Getriebeeinheit 1 abgewandten Stirnseite der Generatoreinheit 2 kann also entfallen.

An der Rotorhohlwelle 23 ist im vorliegenden Ausführungsbeispiel an der von der Getriebeeinheit 1 abgewandten Stirnseite der Generatoreinheit 2 eine Bremsscheibe 231 drehfest montiert. Die Bremsscheibe 231 ist damit für Wartungszwecke einfach zugänglich. Ein der Bremsscheibe 231 zugeordneter Bremssattel 24 ist an dem von der Getriebeeinheit 1 abgewandt angeordneten Gehäusedeckel befestigt.

Die Getriebehohlwelle 162 kann mit der Abtriebswelle 16 der Getriebeeinheit 1 durch eine Zahnkupplung mit Kurz- oder Bogenverzahnung verbunden sein. Alternativ dazu kann die Getriebehohlwelle 162 mit der Abtriebswelle 16 der Getriebeeinheit 1 auch durch einen Innenspannsatz verbunden sein. Der Innenspannsatz umfaßt dabei zumindest jeweils einen Außenring und einen Innenring, die zueinander korrespondierende konische Kontaktflächen aufweisen und mittels mehrerer sich axial erstreckender Spannschrauben gegeneinander verspannt werden können. Durch Verspannung des zumindest einen Außenrings und des zumindest einen Innenrings können entsprechend einer bevorzugten Ausführungsform sowohl die Abtriebswelle 16 der Getriebeeinheit 1 und die Getriebehohlwelle 162 als auch die Getriebehohlwelle 162 und die Rotorhohlwelle 23 miteinander verbunden werden, beispielsweise kraftschlüssig. Die Getriebehohlwelle 162 kann beispielsweise durch eine Verspannung des Außen- und Innenrings aufgeweitet werden. Dies führt dann zu einer kraftschlüssigen Verbindung zwischen Getriebehohlwelle 162 und Rotorhohlwelle 23. Die Rotorhohlwelle 23 kann beispielsweise auch mittels einer Paßfederverbindung, die axial auf den Innenspannsatz ausgerichtet ist, mit der Getriebehohlwelle 162 verbunden werden.

Alternativ zu einer Zahnkupplung oder zu einem Innenspannsatz kann die Getriebehohlwelle 162 mit der Abtriebswelle 16 der Getriebeeinheit 1 durch einen Außenspannsatz verbunden sein. Vorteilhafterweise ist bei Verwendung eines Außenspannsatzes am generatorseitigen Endabschnitt der Abtriebswelle 16 der Getriebeeinheit 1 ein Flansch vorgesehen. Über den Außen-spannsatz kann auch die Rotorwelle 23 mit der Getriebehohlwelle 162 bzw. Abtriebswelle 16 verbunden werden.

Der die Lageranordnung 161 der Abtriebswelle 16 konzentrisch umgebende hohlzylindrische Fortsatz des Gehäusestutzens 152 ist im vorliegenden Ausführungsbeispiel an einen zwischen Getriebeeinheit 1 und Generatoreinheit 2 angeordneten Gehäusezwischenflansch 151 angeformt. Am Gehäusezwischenflansch 151 ist sowohl ein Statormantel 211 der Generatoreinheit 2 als auch das Hohlrad 124 der zweiten Planetenradstufe 12 montiert. Zusätzlich weist der Gehäusezwischenflansch 151 einen Lagersitz für ein generatorseitiges Planetenträgerlager 126 der zweiten Planetenradstufe 12 auf.

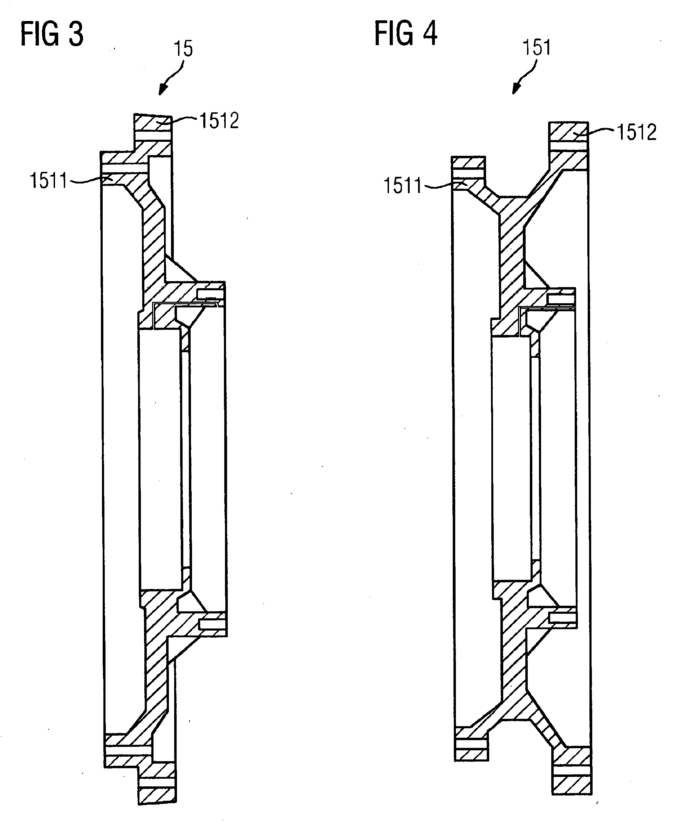

Entsprechend Figur 3 weist der Gehäusezwischenflansch 151 jeweils einen Flanschfortsatz 1511, 1512 auf, an dem der Statormantel 211 bzw. das Hohlrad 124 der zweiten Planetenradstufe 12 montiert ist. In Figur 4 ist eine Variante eines Gehäusezwischenflansches 151 dargestellt, bei welcher der dem Statormantel 211 zugeordnete Flanschfortsatz 1512 und der dem Hohlrad 124 zugeordnete Flanschfortsatz 1511 axial voneinander beabstandet sind.

Das Getriebegehäuse 15 weist eine vollkardanische umfangssymmetrische oder teilsymmetrische Aufhängung 13 zur Verbindung mit einem tragenden Strukturelement der Windkraftanlage aufweist. Dieses tragende Strukturelement ist beispielsweise ein Rahmen oder eine Gondel der Windkraftanlage.

Die zweite Planetenradstufe 12 ist hinsichtlich ihrer Übersetzung derart dimensioniert, daß sich bei Wahl einer durch 3 teilbaren Generatorpolzahl sowie bei optimaler Auslegung für Nenndrehzahl im wesentlichen identische Außendurchmesser von Stator der Generatoreinheit 2 und Hohlrad 124 der zweiten Planetenradstufe 12 ergeben. Generatorseitige Lager der Getriebeeinheit 1 sind elektrisch isolierend ausgeführt. Damit kann ein Stromfluß von der Getriebeeinheit 1 in einen Rotor der Generatoreinheit 2 vermieden werden.

Durch die vollkardanischen Aufhängung des Antriebssystems in Kombination mit einer Transversal- und Radialkraftfreiheit und einer Zweipunkt- bzw. Momentenlagerung des Antriebssystems entsteht ein Antriebstrang, der nur noch mit Torsion beaufschlagt wird. Durch ein gehäuseseitiges Zusammenfügen von Getriebeeinheit 1 und Generatoreinheit 2 unter Ausnutzung ihrer hohen Steifigkeit kann trotz deutlich weniger steifer Auflagerelemente in der kardanischen Aufhängung zumindest eine deutliche Reduktion von Zwangskräften im Antriebsstrang erzielt werden.

Durch Kombination der Zweipunkt- bzw. Momentenlagerung des Antriebssystems mit der vollkardanischen Aufhängung des auch die Generatoreinheit 2 umfassenden Getriebegehäuses 15 wird eine zwischen Getriebeeinheit 1 und Generatoreinheit 2 angeordnete Kupplung deutlich weniger belastet. Diese Kupplung kann daher erheblich steifer ausgeführt werden. Dies bietet wiederum weitere Vorteile in bezug auf Betriebsdynamik.

Eine Ausgestaltung der Hauptlager der Getriebeeinheit 1 kann weiterhin ohne Berücksichtigung von Auflagern nachfolgender Komponenten erfolgen. Dadurch wird ein Einsatz von Momentenlagern, die lediglich einen deutlich verringerten Bauraum benötigen, für die Hauptlager der Getriebeeinheit 1 in einer technisch beherrschbaren Form für Großantriebe möglich. Darüber hinaus ist eine torsionsbedingte Wellenflucht-Verdrillung erfindungsgemäß durch die vollkardanische Aufhängung für die Getriebeeinheit 1 schädigungsirrelevant geworden.

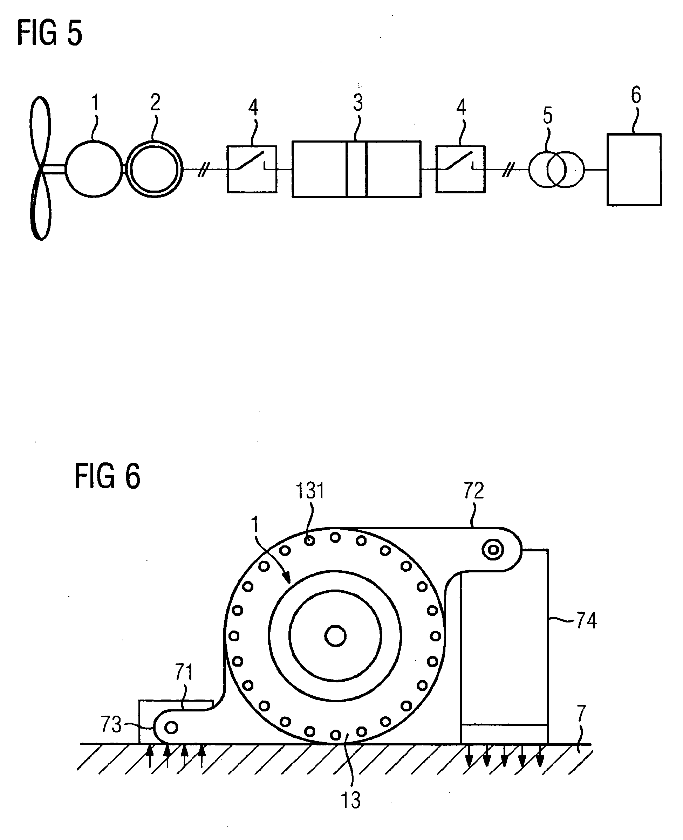

Die Generatoreinheit 2 weist im vorliegenden Ausführungsbeispiel 3 unabhängige Wicklungssysteme auf, die an einen in Figur 5 dargestellten Vollumrichter 3 angeschlossen sind. Der Vollumrichter 3 ermöglicht eine netzdynamische Entkopplung und ist über Lasttrennschalter 4 an die Generatoreinheit 2 einerseits sowie andererseits an einen Transformator 5 zur Leistungseinspeisung in ein Energieversorgungsnetz 6 angeschlossen. Darüber hinaus sind für jeden Pol getrennt isolierte Generatorwicklungen vorgesehen. Des weiteren sind die 3 unabhängigen Wicklungssysteme außerhalb des die Generatoreinheit 2 umgebenden Getriebegehäuses 15 verschaltet. Die Generatoreinheit ist 9- bis 30-polig ausgestaltet, bevorzugt 12- bis 24-polig.

Entsprechend dem in Figur 6 dargestellten Ausführungsbeispiel ist die vollkardanische Aufhängung 13 durch eine das Getriebegehäuse 15 vollumfänglich radial umgebende Ringstütze gebildet. Die Ringstütze 13 weist in Umfangsrichtung mehrere im wesentlichen äquidistant angeordnete Bohrungen 131 auf, in die elastische Bolzen mit jeweils einem ersten Endabschnitt eingesetzt sind. Die elastischen Bolzen sind mit einer korrespondierenden Drehmomentstütze am tragenden Strukturelement 7 der Windkraftanlage verbunden. Die korrespondierende Drehmomentstütze umfaßt ebenfalls ein Ringelement mit in Umfangsrichtung im wesentlichen äquidistant angeordneten Bohrungen, in welche die elastischen Bolzen mit einem zweiten Endabschnitt eingesetzt sind. Außerdem weist die korrespondierende Drehmomentstütze entsprechend dem in Figur 6 dargestellten Ausführungsbeispiel zwei asymmetrisch angeformte Stützarme 71, 72 auf, die jeweils mit einem Endabschnitt in eine Aufnahme 73, 74 am tragenden Strukturelement 7 eingesetzt und dort mit diesem verbunden sind.

Die elastischen Bolzen der vollkardanischen Aufhängung 13 sind axial demontierbare Elastomerbolzen. Auch der Kupplungsflansch 14 weist entsprechend Figur 1 in Umfangsrichtung mehrere im wesentlichen äquidistant angeordnete Bohrungen 141 auf, in die axial demontierbare Elastomerbolzen eingesetzt sind, die mit einem korrespondierenden Rotorwellenkupplungsflansch verbunden sind. Bei demontierten Elastomerbolzen der vollkardanischen Aufhängung 13 und des Kupplungsflansches 14 ist eine hinsichtlich einer Wellenanordnung der Getriebeeinheit 1 radiale Aus- bzw. Einbaurichtung des Antriebssystems freigegeben.

Zusatzaggregate der Getriebeeinheit 1, beispielsweise Ölanlage, Kühler und Hydraulik, sind vorteilhafterweise direkt am tragenden Strukturelement 7 der Windkraftanlage montiert. Über die vollkardanische Aufhängung 13 sowie eine elastische Kupplung zwischen Rotorwelle und Antriebswelle der Getriebeeinheit 1 sind die Zusatzaggregate damit vom Getriebegehäuse 15 entkoppelt.

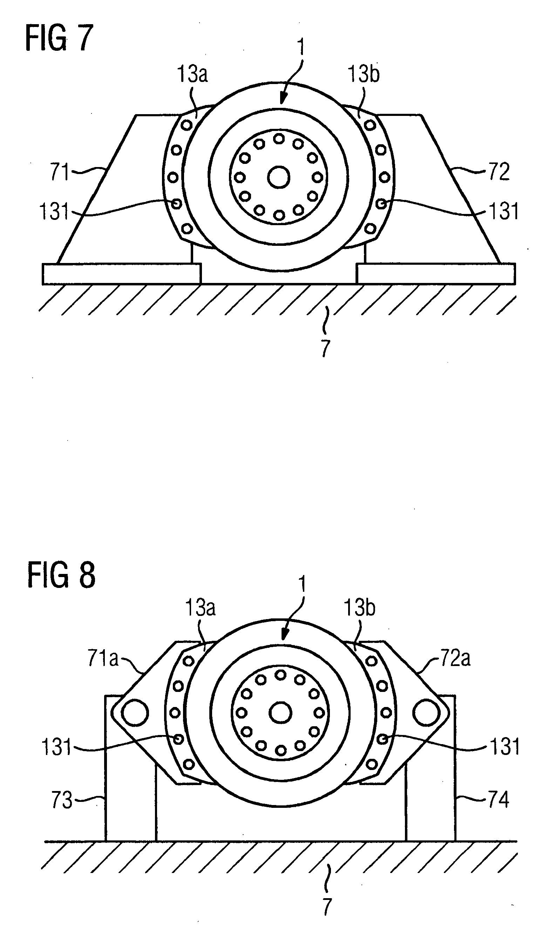

In Figur 7 und 8 sind jeweils zwei Ringsegmentstützen 13a, 13b zur teilumfänglichen vollkardanischen Aufhängung des Antriebssystems dargestellt. Die Ringsegmentstützen 13a, 13b weisen jeweils in Umfangsrichtung mehrere im wesentlichen äquidistant angeordnete Bohrungen 131 auf, in die elastische Bolzen eingesetzt sind. Zusätzlich sind die elastischen Bolzen mit korrespondierenden Drehmomentstützen 71, 72 am tragenden Strukturelement 7 der Windkraftanlage verbunden. Entsprechend dem in Figur 7 dargestellten Ausführungsbeispiel sind die korrespondierenden Drehmomentstützen 71, 72 direkt am tragenden Strukturelement 7 der Windkraftanlage befestigt. Dagegen umfassen die korrespondierende Drehmomentstützen entsprechend dem in Figur 8 dargestellten Ausführungsbeispiel jeweils einen Stützarm 71a, 72a, der mit einem Endabschnitt in eine Aufnahme 73, 74 am tragenden Strukturelement eingesetzt und dort mit diesem verbunden ist. Damit bleibt eine Einbaufähigkeit wie eine herkömmliche Zweiarmstütze erhalten, ohne daß hierzu eine Hauptrahmenanpassung an der Windkraftanlage erforderlich ist. Da eine Zwangskraftfreiheit bereits gegeben ist, können bekannte Elastomerauflager verwendet werden, die vorzugsweise vollständig entsprechend schwingungsdämpfenden Kriterien ausgelegt sind.

Sowohl bei dem in Figur 7 dargestellten Ausführungsbeispiel als auch bei dem in Figur 8 dargestellten Ausführungsbeispiel umfassen die korrespondierenden Drehmomentstützen am tragenden Strukturelement 7 jeweils ein Ringsegment mit in Umfangsrichtung im wesentlichen äquidistant angeordneten Bohrungen 131. In diesen Bohrungen 131 werden die elastischen Bolzen eingesetzt, die ebenso wie beim Ausführungsbeispiel entsprechend Figur 6 als axial demontierbare Elastomerbolzen ausgestaltet sein können. Vorzugsweise schneiden sich Symmetrieachse der Drehmomentstützen und Drehachse des Antriebssystems.

Darüber hinaus kann der Kupplungsflansch entsprechend einer weiteren Ausführungsform mehrere zueinander versetzte Bohrungsreihen aufweisen, in deren Bohrungen axial demontierbare Elastomerbolzen eingesetzt sind. Dadurch kann der Kupplungsflansch hinsichtlich seines Außendurchmessers bei gleichen Bohrungsabständen verkleinert ausgeführt werden.

Des weiteren können die Elastomerbolzen unterschiedliche, entsprechend Durchmesser und Flanschart angepaßte Steifigkeiten aufweisen. Insbesondere der Kupplungsflansch mit im Vergleich zur Aufhängung kleinerem Durchmesser kann aus härterem Material sein, während die Aufhängung aus weicherem Material gefertigt sein kann.

Die Verwendung des beschriebenen Antriebssystems ist nicht nur auf Windkraftanlagen beschränkt, sondern beispielsweise auch in Mühlenantriebssystemen denkbar, bei denen die Generatoreinheit durch eine Motoreinheit ersetzt wird.

## Patentansprüche

1. Antriebssystem für eine Windkraftanlage mit
- einer zumindest eine Planetenradstufe (11, 12), die ein Hohlrad (114, 124), mehrere Planetenräder (113, 123), einen Planetenträger (112, 122) und ein Sonnenrad (111, 121) aufweist, umfassenden Getriebeeinheit (1),
- einer der Getriebeeinheit (1) zugeordneten ersten Welle, die einen mit einer Arbeitsmaschinen- oder Rotorwelle verbindbaren Kupplungsflansch (14) aufweist und über den Planetenträger (112) gelagert ist,
- einem die Getriebeeinheit (1) und eine mit einer zweiten Welle (16) der Getriebeeinheit (1) verbundene Motor- oder Generatoreinheit (2) umgebenden Getriebegehäuse (15),
- einem drehfest mit einer Rotorhohlwelle (23) verbundenen Rotor (22) der Motor- oder Generatoreinheit (2),
- einem zwischen Getriebeeinheit (1) und Motor- oder Generatoreinheit (2) angeordneten Getriebegehäusestutzen (152) mit einem hohlzylindrischen Fortsatz, der einen motor- oder generatorseitigen Endabschnitt der zweiten Welle (16) der Getriebeeinheit (1) konzentrisch umgibt und einen Lagersitz für eine radial zwischen der zweiten Welle (16) und dem hohlzylindrischen Fortsatz angeordnete Lageranordnung (161) bildet,
- zumindest einem äußeren Lagerelement der Lageranordnung (161), das mit dem hohlzylindrischen Fortsatz verbunden ist, wobei mittels der Lageranordnung (161) sowohl die zweite Welle (16) der Getriebeeinheit (1) als auch die Rotorhohlwelle (23) gelagert ist,
**dadurch gekennzeichnet, dass** das Antriebssystem eine radial zwischen der zweiten Welle (16) der Getriebeeinheit (1) und der Rotorhohlwelle (23) angeordnete Kupplung oder Spannverbindung (163) umfasst und der Rotor (22) und die Rotorhohlwelle (23) den hohlzylindrischen Fortsatz konzentrisch umgeben.

2. Antriebssystem nach Anspruch 1,
bei dem ein motor- oder generatorseitiger Endabschnitt der zweiten Welle (16) der Getriebeeinheit (1) von einer Getriebehohlwelle (162) konzentrisch umgeben und mit dieser drehfest verbunden ist.

3. Antriebssystem einem der Ansprüche 1 oder 2,
bei dem zumindest ein inneres Lagerelement der Lageranordnung (161) vorgesehen ist, das mit der zweiten Welle (16) oder der Getriebehohlwelle (162) verbunden ist.

4. Antriebssystem nach einem der Ansprüche 1 bis 3,
bei dem die Rotorhohlwelle (23) mit der zweiten Welle (16) der Getriebeeinheit (1) oder mit der Getriebehohlwelle (162) durch eine Zahnkupplung mit Kurz- oder Bogenverzahnung verbunden ist.

5. Antriebssystem nach einem der Ansprüche 1 bis 3,
bei dem die Rotorhohlwelle (23) mit der zweiten Welle (16) der Getriebeeinheit (1) oder mit der Getriebehohlwelle (162) durch einen Innenspannsatz verbunden ist.

6. Antriebssystem nach Anspruch 5,
bei dem der Innenspannsatz zumindest jeweils einen Außenring und einen Innenring umfaßt, die zueinander korrespondierende konische Kontaktflächen aufweisen und mittels mehrerer sich axial erstreckender Spannschrauben gegeneinander verspannbar sind.

7. Antriebssystem nach einem der Ansprüche 1 bis 6,
bei dem die zweite Welle (16) der Getriebeeinheit (1) axial etwa zur Hälfte von der Getriebehohlwelle (162) umgeben ist.

8. Antriebssystem nach einem der Ansprüche 1 bis 7,
bei dem die im hohlzylindrischen Fortsatz angeordnete Lageranordnung (161) axial mittig auf den Rotor (22) der Motor-oder Generatoreinheit (2) ausgerichtet ist.

9. Antriebssystem nach einem der Ansprüche 1 bis 8,
bei dem die im hohlzylindrischen Fortsatz angeordnete Lageranordnung (161) ein doppelreihiges Lager in X-Anordnung umfaßt.

10. Antriebssystem nach einem der Ansprüche 1 bis 9,
bei dem die Rotorhohlwelle (23) und die zweite Welle (16) der Getriebeeinheit (1) ausschließlich mittels der im hohlzylindrischen Fortsatz angeordneten Lageranordnung (161) gelagert sind.

11. Antriebssystem nach einem der Ansprüche 1 bis 10,
bei dem der Getriebegehäusestutzen (152) an einen zwischen Getriebeeinheit (1) und Motor- oder Generatoreinheit (2) angeordneten Gehäusezwischenflansch (151) angeformt ist.

12. Antriebssystem nach Anspruch 11,
bei dem der Gehäusezwischenflansch (151) einen Lagersitz für ein motor- oder generatorseitiges Planetenträgerlager (126) aufweist.

13. Antriebssystem nach einem der Ansprüche 11 oder 12,
bei dem ein Statormantel (211) der Motor- oder Generatoreinheit (2) am Gehäusezwischenflansch (151) montiert ist.

14. Antriebssystem nach einem der Ansprüche 11 oder 12,
bei dem ein Hohlrad (124) einer motor- oder generatorseitigen Planetenradstufe (12) am Gehäusezwischenflansch (151) montiert ist.

15. Antriebssystem nach einem der Ansprüche 11 bis 13,
bei dem der Gehäusezwischenflansch (151) jeweils einen Flanschfortsatz (1511, 1512) aufweist, an dem jeweils ein Statormantel (211) der Motor- oder Generatoreinheit (2) oder ein Hohlrad (124) einer motor- oder generatorseitigen Planetenradstufe (12) montiert ist.

16. Antriebssystem nach Anspruch 15,
bei dem der dem Statormantel (211) zugeordnete Flanschfortsatz (1512) und der dem Hohlrad (124) zugeordnete Flanschfortsatz (1511) axial voneinander beabstandet sind.

17. Antriebssystem nach einem der Ansprüche 1 bis 16,
bei dem die ersten Welle der Getriebeeinheit einen mit der Arbeitsmaschinen- oder Rotorwelle elastisch verbindbaren Kupplungsflansch (14) aufweist, und bei dem das Getriebegehäuse (15) eine kardanische umfangssymmetrische oder teilsymmetrische Aufhängung (13) zur Verbindung mit einem tragenden Strukturelement (7) der Windkraftanlage aufweist.

18. Antriebssystem nach Anspruch 17,
bei dem die kardanische Aufhängung durch eine das Getriebegehäuse (15) vollumfänglich radial umgebende Ringstütze (13) gebildet ist, die in Umfangsrichtung mehrere im wesentlichen äquidistant angeordnete Bohrungen (131) aufweist, in die elastische Bolzen eingesetzt sind, die mit einer korrespondierenden Drehmomentstütze am tragenden Strukturelement (7) der Windkraftanlage verbindbar sind.

19. Antriebssystem nach Anspruch 18,
bei dem die korrespondierende Drehmomentstütze ein Ringelement mit in Umfangsrichtung im wesentlichen äquidistant angeordneten Bohrungen umfaßt, in welche die elastischen Bolzen einsetzbar sind.

20. Antriebssystem nach Anspruch 19,
bei dem die korrespondierende Drehmomentstütze zwei symmetrisch oder asymmetrisch angeformte Stützarme (71, 72) umfaßt, die jeweils mit einem Endabschnitt in eine Aufnahme (73, 74) am tragenden Strukturelement (7) einsetzbar und dort mit diesem verbindbar sind.

21. Antriebssystem nach Anspruch 20,
bei dem die kardanische Aufhängung durch zwei das Getriebegehäuse teilumfänglich radial umgebende Ringssegmentstützen (13a, 13b) gebildet ist, die jeweils in Umfangsrichtung mehrere im wesentlichen äquidistant angeordnete Bohrungen (131) aufweisen, in die elastische Bolzen eingesetzt sind, die mit korrespondierenden Drehmomentstützen am tragenden Strukturelement (7) der Windkraftanlage verbindbar sind.

22. Antriebssystem nach Anspruch 21,
bei dem die korrespondierenden Drehmomentstützen jeweils ein Ringsegment (13a, 13b) mit in Umfangsrichtung im wesentlichen äquidistant angeordneten Bohrungen (131) umfassen, in welche die elastischen Bolzen einsetzbar sind.

23. Antriebssystem nach Anspruch 22,
bei dem die korrespondierende Drehmomentstützen jeweils einen Stützarm (71, 72) umfassen, der mit einem Endabschnitt in eine Aufnahme (73, 74) am tragenden Strukturelement (7) einsetzbar und dort mit diesem verbindbar ist.

24. Antriebssystem nach einem der Ansprüche 18 bis 23,
bei dem die elastischen Bolzen der kardanischen Aufhängung axial demontierbare Elastomerbolzen sind, und bei dem der Kupplungsflansch in Umfangsrichtung mehrere im wesentlichen äquidistant angeordnete Bohrungen aufweist, in die axial demontierbare Elastomerbolzen eingesetzt sind, die mit einem korrespondierenden Arbeitsmaschinen- oder Rotorwellenkupplungsflansch verbindbar sind.

25. Antriebssystem nach Anspruch 24,
bei dem bei demontierten Elastomerbolzen der kardanischen Aufhängung und des Kupplungsflansches eine hinsichtlich einer Wellenanordnung der Getriebeeinheit radiale Aus- und/oder Einbaurichtung des Antriebssystems freigegeben ist.

26. Antriebssystem nach einem der Ansprüche 17 bis 25,
bei dem Zusatzaggregate der Getriebeeinheit direkt am tragenden Strukturelement der Windkraftanlage montiert und über die kardanische Aufhängung sowie eine elastische Kupplung zwischen Arbeitsmaschinen- oder Rotorwelle und der ersten Welle der Getriebeeinheit vom Getriebegehäuse entkoppelt sind.

27. Antriebssystem nach einem der Ansprüche 17 bis 26,
bei dem die Getriebeeinheit (1) ein erstes (115) und ein zweites Hauptlager (116) umfaßt, mittels derer die erste Welle der Getriebeeinheit gelagert ist, und die zwischen Planetenträgerwangen und Getriebegehäuse (15) angeordnet sind.

28. Antriebssystem nach einem der Ansprüche 17 bis 27,
bei dem die Getriebeeinheit (1) eine erste (11) und zweite Planetenradstufe (12) in koaxialer Bauform umfaßt.

29. Antriebssystem nach einem der Ansprüche 1 bis 28,
bei dem mit der Rotorhohlwelle (23) eine Bremsscheibe (233) drehfest verbunden ist.

30. Antriebssystem nach Anspruch 29,
bei dem die Bremsscheibe an einer von der Getriebeeinheit abgewandten Stirnseite der Motor- oder Generatoreinheit angeordnet ist.

31. Antriebssystem nach einem der Ansprüche 1 bis 30,
bei dem motor- oder generatorseitige Lager der Getriebeeinheit elektrisch isolierend ausgeführt sind.

32. Antriebssystem nach einem der Ansprüche 1 bis 31,
bei dem die Getriebeeinheit mit einer Generatoreinheit verbunden ist, und bei dem die erste Welle der Getriebeeinheit eine getriebeseitige Antriebswelle ist, und bei dem die zweite Welle der Generatoreinheit eine getriebeseitige Abtriebswelle, und bei dem der Kupplungsflansch der getriebeseitigen Antriebswelle mit einer Rotorwelle verbindbar ist.

## Claims

1. Drive system for a wind turbine, comprising
- a transmission unit (1) comprising at least one planetary gear stage (11, 12) which has a ring gear (114, 124), a plurality of planetary gears (113, 123), a planetary carrier (112, 122) and a sun gear (111, 121),
- a first shaft which is associated with the transmission unit (1) and has a coupling flange (14) that can be connected to a work machine or rotor shaft, and which is mounted by way of the planetary carrier (112),
- a gearbox housing (15) enclosing the transmission unit (1) and a motor or generator unit (2) connected to a second shaft (16) of the transmission unit (1),
- a rotor (22) of the motor or generator unit (2) which is connected in a rotatably fixed manner to a hollow rotor shaft (23),
- a gearbox housing support (152) arranged between transmission unit (1) and motor or generator unit (2) and having a hollow cylindrical extension which concentrically encloses a motor- or generator-side end section of the second shaft (16) of the transmission unit (1) and forms a bearing seat for a bearing arrangement (161) radially disposed between the second shaft (16) and the hollow cylindrical extension,
- at least one outer bearing element of the bearing arrangement (161) which is connected to the hollow cylindrical extension, wherein both the second shaft (16) of the transmission unit (1) and the hollow rotor shaft (23) are mounted by means of the bearing arrangement (161), **characterised in that** the drive system comprises a coupling or clamping connection (163) radially arranged between the second shaft (16) of the transmission unit (1) and the hollow rotor shaft (23) and the rotor (22) and the hollow rotor shaft (23) concentrically enclose the hollow cylindrical extension.

2. Drive system according to claim 1,
wherein a motor- or generator-side end section of the second shaft (16) of the transmission unit (1) is concentrically enclosed by a hollow gearbox shaft (162) and connected to the latter in a rotatably fixed manner.

3. Drive system according to one of claims 1 or 2,
wherein at least one inner bearing element of the bearing arrangement (161) is provided which is connected to the second shaft (16) or to the hollow gearbox shaft (162).

4. Drive system according to one of claims 1 to 3,
wherein the hollow rotor shaft (23) is connected to the second shaft (16) of the transmission unit (1) or to the hollow gearbox shaft (162) by means of a toothed coupling having involute splines or spiral toothing.

5. Drive system according to one of claims 1 to 3,
wherein the hollow rotor shaft (23) is connected to the second shaft (16) of the transmission unit (1) or to the hollow gearbox shaft (162) by means of an internal clamping set.

6. Drive system according to claim 5,
wherein the internal clamping set in each case comprises at least one outer ring and one inner ring which have conical contact surfaces corresponding to one another and can be interlocked with respect to one another by means of a plurality of axially extending clamping bolts.

7. Drive system according to one of claims 1 to 6,
wherein approximately half of the second shaft (16) of the transmission unit (1) is axially enclosed by the hollow gearbox shaft (162).

8. Drive system according to one of claims 1 to 7,
wherein the bearing arrangement (161) disposed in the hollow cylindrical extension is axially aligned centrally onto the rotor (22) of the motor or generator unit (2).

9. Drive system according to one of claims 1 to 8,
wherein the bearing arrangement (161) disposed in the hollow cylindrical extension comprises a double-rowed bearing in an X arrangement.

10. Drive system according to one of claims 1 to 9,
wherein the hollow rotor shaft (23) and the second shaft (16) of the transmission unit (1) are mounted solely by means of the bearing arrangement (161) disposed in the hollow cylindrical extension.

11. Drive system according to one of claims 1 to 10,
wherein the gearbox housing support (152) is integrally formed with a housing intermediate flange (151) arranged between transmission unit (1) and motor or generator unit (2).

12. Drive system according to claim 11,
wherein the housing intermediate flange (151) has a bearing seat for a planetary carrier bearing (126) on the motor or generator side.

13. Drive system according to one of claims 11 or 12,
wherein a stator housing (211) of the motor or generator unit (2) is mounted on the housing intermediate flange (151).

14. Drive system according to one of claims 11 or 12,
wherein a ring gear (124) of a motor- or generator-side planetary gear stage (12) is mounted on the housing intermediate flange (151).

15. Drive system according to one of claims 11 to 13,
wherein the housing intermediate flange (151) in each case has a flange extension (1511, 1512) on which a stator housing (211) of the motor or generator unit (2) or a ring gear (124) of a motor- or generator-side planetary gear stage (12) is mounted in each case.

16. Drive system according to claim 15,
wherein the flange extension (1512) associated with the stator housing (211) and the flange extension (1511) associated with the ring gear (124) are axially spaced apart from one another.

17. Drive system according to one of claims 1 to 16,
wherein the first shaft of the transmission unit has a coupling flange (14) which can be resiliently connected to the work machine or rotor shaft, and wherein the gearbox housing (15) has a universal-mounted circumferentially symmetrical or partially symmetrical suspension (13) for connecting to a supporting structural element (7) of the wind turbine.

18. Drive system according to claim 17,
wherein the universal-mounted suspension is formed by means of a ring support (13) radially enclosing the gearbox housing (15) around its entire circumference and having a plurality of substantially equidistantly arranged boreholes (131) in the circumferential direction, into which boreholes are inserted resilient bolts which can be connected to a corresponding torque support on the supporting structural element (7) of the wind turbine.

19. Drive system according to claim 18,
wherein the corresponding torque support comprises a ring element having substantially equidistantly arranged boreholes in the circumferential direction, into which boreholes the resilient bolts can be inserted.

20. Drive system according to claim 19,
wherein the corresponding torque support comprises two symmetrically or asymmetrically integrally formed support arms (71, 72) which can be respectively inserted by an end section into a receptacle (73, 74) on the supporting structural element (7), where said support arms can be connected to the supporting structural element.

21. Drive system according to claim 20,
wherein the universal-mounted suspension is formed by means of two ring segment supports (13a, 13b) radially enclosing the gearbox housing over part of the circumference and each having a plurality of substantially equidistantly arranged boreholes (131) in the circumferential direction, into which boreholes are inserted resilient bolts which can be connected to corresponding torque supports on the supporting structural element (7) of the wind turbine.

22. Drive system according to claim 21,
wherein the corresponding torque supports each comprise a ring segment (13a, 13b) having substantially equidistantly arranged boreholes (131) in the circumferential direction, into which boreholes the resilient bolts can be inserted.

23. Drive system according to claim 22,
wherein the corresponding torque supports each comprise a support arm (71, 72) which can be inserted by an end section into a receptacle (73, 74) on the supporting structural element (7), where said support arm can be connected to said supporting structural element.

24. Drive system according to one of claims 18 to 23,
wherein the resilient bolts of the universal-mounted suspension are axially removable elastomer bolts, and wherein the coupling flange has a plurality of substantially equidistantly arranged boreholes in the circumferential direction, into which boreholes are inserted axially removable elastomer bolts which can be connected to a corresponding coupling flange of a work machine or rotor shaft.

25. Drive system according to claim 24,
wherein when the elastomer bolts of the universal-mounted suspension and of the coupling flange are removed, a radial removal and/or installation direction of the drive system is enabled in respect of a shaft arrangement of the transmission unit.

26. Drive system according to one of claims 17 to 25,
wherein add-on assemblies of the transmission unit are mounted directly on the supporting structural element of the wind turbine and decoupled from the gearbox housing by means of the universal-mounted suspension as well as by means of a resilient coupling between work machine or rotor shaft and the first shaft of the transmission unit.

27. Drive system according to one of claims 17 to 26,
wherein the transmission unit (1) comprises a first (115) and a second main bearing (116) by means of which the first shaft of the transmission unit is mounted, and which are arranged between planetary carrier sidewalls and gearbox housing (15).

28. Drive system according to one of claims 17 to 27,
wherein the transmission unit (1) comprises a first (11) and second planetary gear stage (12) in a coaxial design.

29. Drive system according to one of claims 1 to 28,
wherein a brake disc (233) is connected to the hollow rotor shaft (23) in a rotatably fixed manner.

30. Drive system according to claim 29,
wherein the brake disc is arranged on a front face of the motor or generator unit facing away from the transmission unit.

31. Drive system according to one of claims 1 to 30,
wherein motor- or generator-side bearings of the transmission unit are implemented as electrically insulating.

32. Drive system according to one of claims 1 to 31,
wherein the transmission unit is connected to a generator unit, and wherein the first shaft of the transmission unit is a gearbox-side drive shaft, and wherein the second shaft of the generator unit is a gearbox-side output shaft, and wherein the coupling flange of the gearbox-side drive shaft can be connected to a rotor shaft.

## Revendications

1. Système d'entraînement pour une éolienne, comprenant
- un groupe ( 1 ) de transmission, comprenant au moins un étage ( 11, 12 ) de roues satellites, qui a une roue ( 114, 124 ) à denture intérieure, plusieurs roues ( 113, 123 ) satellites, une cage ( 112, 122 ) de transmission planétaire et une roue ( 111, 121 ) solaire,
- un premier arbre, qui est associé au groupe ( 1 ) de transmission, qui a une bride ( 14 ) d'accouplement pouvant être reliée à un arbre d'une machine fournissant du travail ou à un arbre de rotor et qui est montée par la cage ( 112 ) de transmission planétaire,
- un carter ( 15 ) de transmission entourant le groupe ( 1 ) de transmission et un groupe moteur ou génératrice relié au deuxième arbre ( 16 ) du groupe ( 1 ) de transmission,
- un rotor ( 22 ) du groupe ( 2 ) moteur ou génératrice solidaire en rotation d'un arbre ( 23 ) creux de rotor,
- un appui ( 152 ) de carter de transmission disposé entre le groupe ( 1 ) de transmission et le groupe ( 2 ) moteur ou génératrice et ayant un prolongement cylindrique creux, qui entoure concentriquement un tronçon d'extrémité du côté moteur ou génératrice du deuxième arbre ( 16 ) du groupe ( 1 ) de transmission et qui forme un siège de palier pour un agencement ( 161 ) de palier disposé radialement entre le deuxième arbre ( 16 ) et le prolongement cylindrique creux,
- au moins un élément extérieur de palier de l'agencement ( 161 ) de palier, qui est relié au prolongement cylindrique creux, tant le deuxième arbre ( 16 ) du groupe ( 1 ) de transmission qu'également l'arbre ( 23 ) creux du rotor étant supportés au moyen de l'agencement ( 161 ) de palier,
**caractérisé en ce que** le système d'entraînement comprend un accouplement ou une liaison ( 163 ) de serrage disposé radialement entre le deuxième arbre ( 16 ) du groupe ( 1 ) de transmission et l'arbre ( 23 ) creux du rotor et le rotor ( 22 ) et l'arbre ( 23 ) creux du rotor entourent concentriquement le prolongement cylindrique creux.

2. Système d'entraînement suivant la revendication 1,
dans lequel un tronçon d'extrémité du côté moteur ou génératrice du deuxième arbre ( 16 ) du groupe ( 1 ) de transmission est entouré concentriquement par un arbre ( 162 ) creux de transmission et est solidaire en rotation de celui-ci.

3. Système d'entraînement suivant l'une des revendications 1 ou 2,
dans lequel il est prévu au moins un élément intérieur de palier de l'agencement ( 161 ) de palier, élément qui est relié au deuxième arbre ( 16 ) ou à l'arbre ( 162 ) de transmission.

4. Système d'entraînement suivant l'une des revendications 1 à 3,
dans lequel l'arbre ( 23 ) creux du rotor est relié au deuxième arbre ( 16 ) du groupe ( 1 ) de transmission ou à l'arbre ( 162 ) creux de transmission par un accouplement à dents ayant une denture courte ou une denture hypoïde.

5. Système d'entraînement suivant l'une des revendications 1 à 3,
dans lequel l'arbre ( 23 ) creux du rotor est relié au deuxième arbre ( 16 ) du groupe ( 1 ) de transmission ou à l'arbre ( 162 ) creux de transmission par un jeu de serrage intérieur.

6. Système d'entraînement suivant la revendication 5,
dans lequel le jeu de serrage intérieur comprend au moins respectivement une bague extérieure et une bague intérieure, qui ont des surfaces de contact coniques qui se correspondent et qui peuvent être bloquées l'une par rapport à l'autre au moyen de plusieurs vis de serrage s'étendant axialement.

7. Système d'entraînement suivant l'une des revendications 1 à 6,
dans lequel le deuxième arbre ( 16 ) du groupe ( 1 ) de transmission est entouré axialement, à peu près pour la moitié, par l'arbre ( 162 ) creux de transmission.

8. Système d'entraînement suivant l'une des revendications 1 à 7,
dans lequel l'agencement ( 161 ) de palier disposé dans le prolongement cylindrique creux est orienté axialement au milieu sur le rotor ( 22 ) du groupe ( 2 ) moteur ou génératrice.

9. Système d'entraînement suivant l'une des revendications 1 à 8,
dans lequel l'agencement ( 161 ) de rotor disposé dans le prolongement cylindrique creux comprend un palier à deux rangées suivant un agencement en X.

10. Système d'entraînement suivant l'une des revendications 1 à 9,
dans lequel l'arbre ( 23 ) creux de rotor et le deuxième arbre ( 16 ) du groupe ( 1 ) de transmission sont supportés exclusivement au moyen d'un agencement ( 161 ) de palier disposé dans le prolongement cylindrique creux.

11. Système d'entraînement suivant l'une des revendications 1 à 10,
dans lequel l'appui ( 152 ) du carter de transmission est formé sur une bride ( 151 ) intermédiaire du carter disposée entre le groupe ( 1 ) de transmission et le groupe ( 2 ) moteur ou génératrice.

12. Système d'entraînement suivant la revendication 11,
dans lequel la bride ( 151 ) intermédiaire du carter a un siège de palier pour un palier ( 126 ) de cage de transmission planétaire du côté moteur ou génératrice.

13. Système d'entraînement suivant l'une des revendications 11 ou 12,
dans lequel une enveloppe ( 211 ) statorique du groupe ( 2 ) moteur ou génératrice est montée sur la bride ( 151 ) intermédiaire du carter.

14. Système d'entraînement suivant l'une des revendications 11 ou 12,
dans lequel une roue ( 124 ) à denture intérieure d'un étage ( 12 ) de roues satellites du côté moteur ou génératrice est montée sur la bride ( 151 ) intermédiaire du carter.

15. Système d'entraînement suivant l'une des revendications 11 à 13,
dans lequel la bride ( 151 ) intermédiaire du carter a respectivement un prolongement ( 1511, 1512 ) de bride, sur lequel est montée respectivement une enveloppe ( 211 ) statorique du groupe ( 2 ) moteur ou génératrice ou une roue ( 124 ) à denture intérieure d'un étage ( 12 ) de roues satellites du côté moteur ou génératrice.

16. Système d'entraînement suivant la revendication 15,
dans lequel le prolongement ( 1512 ) de bride associé à l'enveloppe ( 211 ) statorique et le prolongement ( 1211 ) de bride associé à la roue ( 124 ) à denture intérieure sont à distance axialement l'un de l'autre.

17. Système d'entraînement suivant l'une des revendications 1 à 16,
dans lequel le premier arbre du groupe de transmission a une bride ( 14 ) d'accouplement pouvant être reliée élastiquement à l'arbre de la machine fournissant du travail ou à l'arbre du rotor et dans lequel le carter ( 15 ) de transmission a, pour la liaison à un élément ( 7 ) de structure portant de l'éolienne, une suspension ( 13 ) à la cardan à symétrie périphérique ou à symétrie partielle.

18. Système d'entraînement suivant la revendication 17,
dans lequel la suspension à la cardan est formée par un appui ( 13 ) annulaire entourant radialement sur tout le tour le carter ( 15 ) de transmission et ayant, dans la direction périphérique, plusieurs trous ( 131 ) sensiblement équidistants, dans lesquels sont insérés des axes élastiques, qui peuvent être reliés à un appui de couple de rotation correspondant de l'élément ( 7 ) de structure portant de l'éolienne.

19. Système d'entraînement suivant la revendication 18,
dans lequel l'appui de couple de rotation correspondant comprend un élément annulaire ayant des trous sensiblement équidistants dans la direction périphérique, dans lesquels peuvent être insérés les axes élastiques.

20. Système d'entraînement suivant la revendication 19,
dans lequel l'appui de couple de rotation correspondant comprend deux bras ( 71, 72 ) d'appui, qui sont formés de manière symétrique ou de manière dissymétrique et qui peuvent être insérés respectivement par un tronçon d'extrémité dans un logement ( 73, 74 ) de l'élément ( 7 ) de structure portant et y être reliés à celui-ci.

21. Système d'entraînement suivant la revendication 20,
dans lequel la suspension à la cardan est formée de deux appuis ( 13a, 13b ) de segment annulaire entourant radialement sur une partie du pourtour le carter de transmission, appuis qui ont respectivement, dans la direction périphérique, plusieurs trous ( 131 ) sensiblement équidistants, dans lesquels sont insérés les axes élastiques, qui peuvent être reliés à des appuis de couple de rotation correspondants de l'élément ( 7 ) de structure portant de l'éolienne.

22. Système d'entraînement suivant la revendication 21,
dans lequel les appuis de couple de rotation correspondants comprennent respectivement un segment ( 13a, 13b ) annulaire ayant des trous ( 131 ) sensiblement équidistants dans la direction périphérique, dans lesquels peuvent être insérés les axes élastiques.

23. Système d'entraînement suivant la revendication 22,
dans lequel les appuis de couple de rotation correspondants comprennent respectivement un bras ( 71, 72 ) d'appui, qui peut être inséré par un tronçon d'extrémité dans un logement ( 73, 74 ) de l'élément ( 7 ) de structure portant et y être relié à celui-ci.

24. Système d'entraînement suivant l'une des revendications 18 à 23,
dans lequel les axes élastiques de la suspension à la cardan sont des axes en élastomère pouvant être démontés axialement et dans lequel la bride d'accouplement a, dans la direction périphérique, plusieurs trous sensiblement équidistants, dans lesquels sont insérés des axes en élastomère pouvant être démontés axialement, qui peuvent être reliés à une bride correspondante d'un arbre d'une machine fournissant du travail ou d'un arbre de rotor.

25. Système d'entraînement suivant la revendication 24,
dans lequel, lorsque les axes en élastomère de la suspension à la cardan et de la bride d'accouplement sont démontés, une direction radiale de démontage et/ou de montage du système d'entraînement, en ce qui concerne un agencement d'arbre du groupe de transmission, est libérée.

26. Système d'entraînement suivant l'une des revendications 17 à 25,
dans lequel des équipements supplémentaires du groupe de transmission sont montés directement sur l'élément de structure portant de l'éolienne et sont découplés du carter de transmission par la suspension à la cardan, ainsi que par un accouplement élastique entre l'arbre de la machine fournissant du travail ou l'arbre du rotor et le premier arbre du groupe de transmission.

27. Système d'entraînement suivant l'une des revendications 17 à 26,
dans lequel le groupe ( 1 ) de transmission comprend un premier ( 115 ) et un deuxième ( 116 ) paliers principaux, au moyen desquels le premier arbre du groupe de transmission est monté et qui sont disposés entre des joues de la cage de transmission planétaire et le carter ( 15 ) de transmission.

28. Système d'entraînement suivant l'une des revendications 17 à 27,
dans lequel le groupe ( 1 ) de transmission comprend, sous une forme de construction coaxiale, un premier ( 11 ) et un deuxième ( 12 ) étages de roues satellites.

29. Système d'entraînement suivant l'une des revendications 1 à 28, dans lequel un disque ( 233 ) de frein est solidaire en rotation de l'arbre ( 23 ) creux de rotor.

30. Système d'entraînement suivant la revendication 29,
dans lequel le disque de frein est mis sur un côté frontal, éloigné du groupe de transmission, du groupe moteur ou génératrice.

31. Système d'entraînement suivant l'une des revendications 1 à 30,
dans lequel des paliers du côté moteur ou génératrice du groupe de transmission sont réalisés en étant isolés électriquement.

32. Système d'entraînement suivant l'une des revendications 1 à 31,
dans lequel le groupe de transmission est relié à un groupe génératrice et dans lequel le premier arbre du groupe de transmission est un arbre menant du côté de la transmission et dans lequel le deuxième arbre du groupe génératrice est un arbre mené du côté de la transmission et dans lequel la bride d'accouplement de l'arbre menant du côté de la transmission peut être relié à un arbre rotorique.
